Europäisches Patentamt

(19) **European Patent Office**

**Office européen des brevets**

(11) Numéro de publication: **0 052 036**
**B1**

(12) **FASCICULE DE BREVET EUROPEEN**

(45) Date de publication du fascicule du brevet:
06.02.85

(51) Int. Cl.⁴: **B 23 K 26/08, H 01 R 43/06**

(21) Numéro de dépôt: **81401650.7**

(22) Date de dépôt: **20.10.81**

(54) Procédé de traitement par rayonnement électromagnétique, tel que faisceau laser, d'une pièce composite.

(30) Priorité: **07.11.80 FR 8023847**

(43) Date de publication de la demande:
**19.05.82 Bulletin 82/20**

(45) Mention de la délivrance du brevet:
**06.02.85 Bulletin 85/6**

(84) Etats contractants désignés:
**AT BE CH DE GB IT LI LU NL SE**

(56) Documents cités:
**DE - A - 2 733 082**
**US - A - 3 663 795**
**US - A - 4 258 246**
**US - A - 4 329 564**

(73) Titulaire: **Claude Benedite LASER TECHNIQUES,
Saint-Cyr, F-87310 St.-Laurent-sur-Gorre (FR)**

(72) Inventeur: **Benedite, Claude, 90, rue des Vignes,
F-87350 Panazol (FR)**
Inventeur: **Lafaye, Marcel, Le Brouillet, F-87800 Nexon
(FR)**
Inventeur: **Lenfant, Jean-Pierre, Le Puy du Moulin,
F-87600 Rochechouart (FR)**
Inventeur: **Reynier, Jacques, Lestrade, F-87110 Bosmie
L'Aiguille (FR)**

(74) Mandataire: **Chevallier, Robert Marie Georges, Cabinet
BOETTCHER 23, rue La Boétie, F-75008 Paris (FR)**

## Description

L'invention a pour objet un procédé de traitement par un rayonnement électromagnétique d'une pièce composite comportant un premier matériau relativement plus absorbant et un second matériau relativement moins absorbant dudit rayonnement, l'un et l'autre matériaux apparaissant par zones en surface, procédé dans lequel on traite au cours d'un déplacement relatif de la pièce et du rayonnement l'un par rapport à l'autre au moins le premier matériau jusqu'à une profondeur donnée. Elle a également pour objet une installation pour la mise en œuvre du procédé.

On connaît des procédés du type rappelé précédemment, dans lesquels on usine une pièce, par exemple le collecteur d'un rotor de machine électrique, au moyen d'un faisceau directif de rayonnement, tel qu'un faisceau laser. On a décrit un tel procédé dans la demande de brevet allemand DE-A 27 33 082.

Un tel procédé présente un inconvénient important du fait que le rayonnement frappe la surface à usiner sous un angle d'incidence normal, ce qui entraîne sa réflexion par les parties réfléchissantes suivant une direction parallèle au rayon incident. Le rayonnement réfléchi, transportant une énergie à peu près égale à celle mise en œuvre pour usiner les parties absorbantes, vient frapper en retour le système émetteur du rayonnement et vient le détruire. Par ailleurs, les défauts de régularité du bord des surfaces à usiner risque d'entraîner la dégradation des masses périphériques qui sont atteintes par le rayonnement si celui-ci a une direction perpendiculaire au plan d'usinage. De façon plus précise, par exemple, l'usinage par rayonnement normal à la surface d'un collecteur de rotor de machine électrique risque, dans le procédé connu, d'atteindre les bobinages ou autres organes sensibles lorsque le faisceau de rayonnement déborde une partie de la surface à usiner du fait d'imperfections inévitables mêmes infimes.

Le but de l'invention est de supprimer les inconvénients cités ci-dessus, c'est-à-dire d'éviter des dégradations du système émetteur du faisceau de rayonnement et tout dégât à la pièce à usiner; un autre but de l'invention est de protéger le personnel des rayonnements réfléchis en restant maître de ces derniers. Un autre but encore est de parvenir à cette sécurité avec une grande cadence de production.

Ces buts sont atteints selon l'invention grâce à un procédé pour traiter par radiation électromagnétique une surface plane d'une pièce composite comprenant une première matière relativement plus absorbante de cette radiation et une deuxième matière relativement moins absorbante de cette radiation, ces deux matières apparaissant par zones à la surface, cette pièce composite faisant partie d'une masse située au-delà d'un bord limitant la surface plane à traiter, caractérisé en ce qu'on donne à la radiation une inclinaison α par rapport à la perpendiculaire à cette surface, la valeur de cette inclinaison α étant déterminée pour que la masse se trouve protégée en restant toujours dans l'ombre limitée par ledit bord de la surface traitée et pour que le rayon éventuellement réfléchi par cette dernière surface se trouve sur une direction déterminée.

Quand il s'agit d'une surface cylindrique ou incurvée d'une pièce composite comprenant une première matière relativement plus absorbante de cette radiation et une deuxième matière relativement moins absorbante de cette radiation, ces deux matières apparaissant par zones à la surface, cette pièce composite faisant partie d'une masse située au-delà d'un bord limitant la surface cylindrique à traiter, selon le procédé on donne à la radiation une première inclinaison β dans un premier plan par rapport à la perpendiculaire à cette surface pour obtenir à la fois un traitement convenable de la surface à traiter et une direction définie du rayon réfléchi éventuel, et une seconde inclinaison γ dans un second plan par rapport à la perpendiculaire à cette surface, la valeur de cette seconde inclinaison γ étant déterminée pour que la masse se trouve protégée en restant toujours dans l'ombre limitée par ledit bord de la surface traitée et pour que tout rayon réfléchi éventuel se trouve sur une direction déterminée.

De préférence, on place un corps absorbant ou dispersant de la radiation sur la direction du rayon réfléchi éventuel.

D'autres caractéristiques et particularités ressortiront de la description, qui sera donnée ci-après uniquement à titre d'exemples, de modes de réalisation de l'invention. On se reportera, à cet effet, aux dessins annexés dans lesquels:

la figure 1 est une vue perspective schématique d'une installation conforme à l'invention pour la mise en œuvre du procédé selon l'invention,

la figure 2 est une vue latérale selon II de la fig. 1 du bloc transfert de l'installation de la fig. 1,

les figures 3, 4 et 5 sont respectivement trois vues d'un collecteur plan de rotor en cours d'usinage sur l'installation de la fig. 1, la fig. 3 selon II de la fig. 1, la fig. 4 orthogonale à la précédente et passant également par l'axe du rotor, la fig. 5 en vue en plan,

les figures 6 et 7 sont des vues latérales et axiales d'un rotor à collecteur cylindrique en cours d'usinage par le procédé selon l'invention.

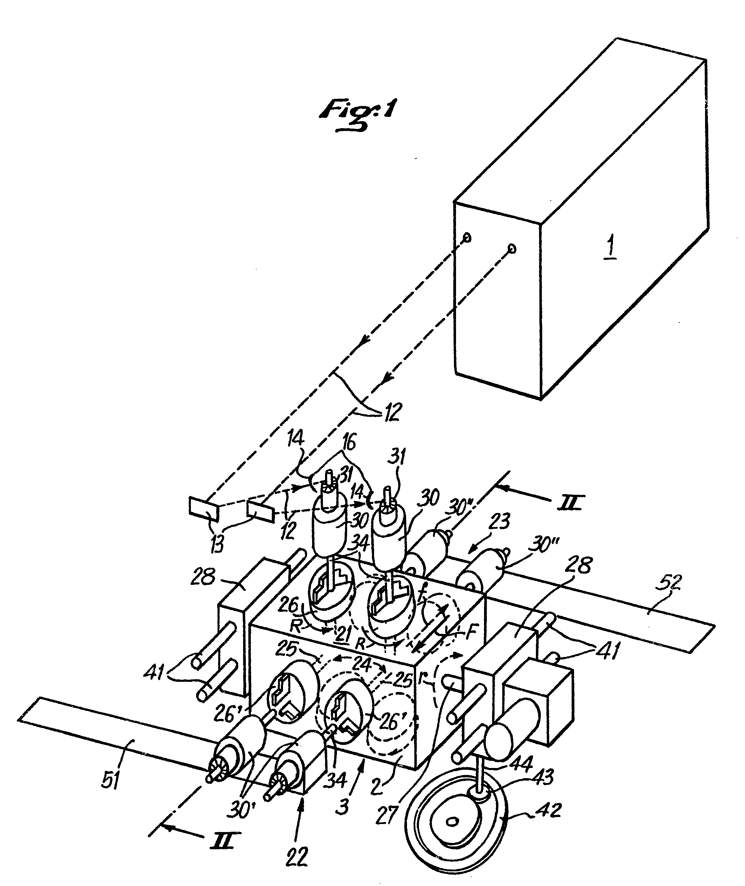

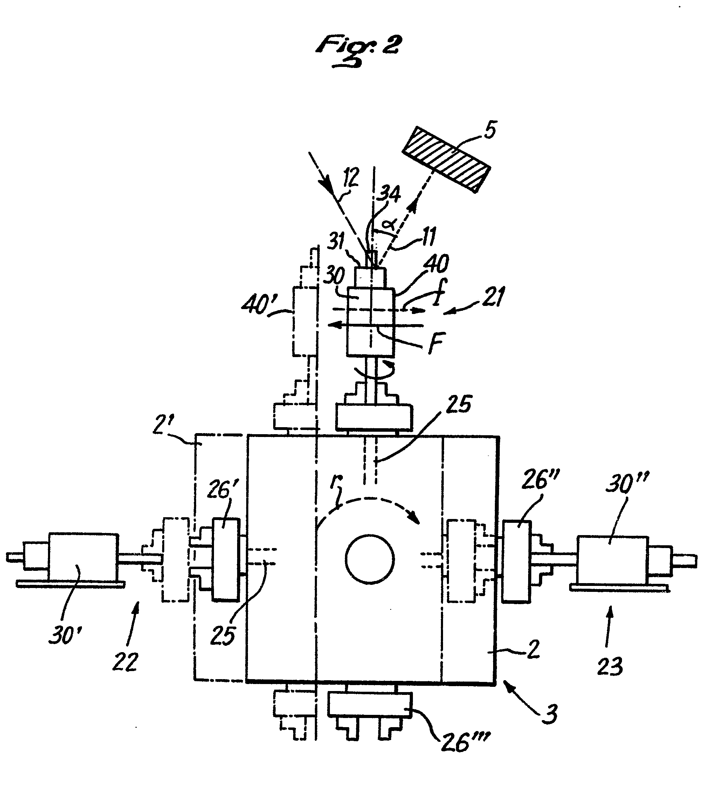

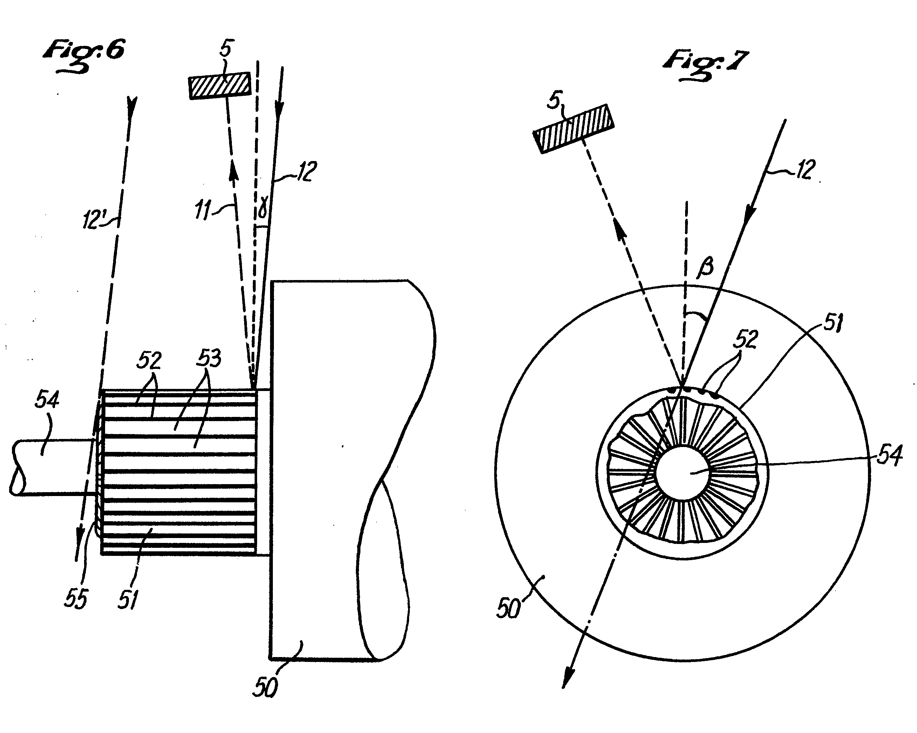

Une installation de l'invention comprend un générateur laser 1 en position fixe, par exemple, mais de façon non limitative, un générateur laser à $CO_2$, émettant deux faisceaux 12 dirigés par deux renvois optiques 13 vers un double poste de traitement ou d'usinage 21 au moyen, chaque fois, d'un focaliseur 14. Le poste de traitement 21 est l'un des trois postes 21 à 23, devant lesquels un bloc transfert 3 à barillet 2 à quatre positions indexées à 90° les unes des autres peut présenter simultanément et respectivement trois de quatre ensembles 24 de chacun deux broches 25 perpendiculaires à l'axe de rotation 27 du barillet 2. Chaque broche 25 porte un mandrin 26 pour y fixer l'axe ou arbre 34 d'un rotor 30. Dans le montage des figures 1 à 5, les rotors 30 à usiner comportent des collecteurs plans 31 dont on désire enlever jusqu'à une certaine profondeur l'isolant 32 d'entre les lames 33 à l'aide chaque fois d'un faisceau 12 associé. Selon l'invention, le rayonnement 12 est dirigé par le renvoi optique 13, éventuellement réglable en inclinaison, et par le focaliseur 14 sur la surface plane du collecteur associé 31 selon un angle α d'au moins 15° environ à au plus 45° environ par rapport à l'axe du rotor 30, c'est-à-dire selon le même angle α par rapport à une perpendiculaire à la surface plane du collecteur.

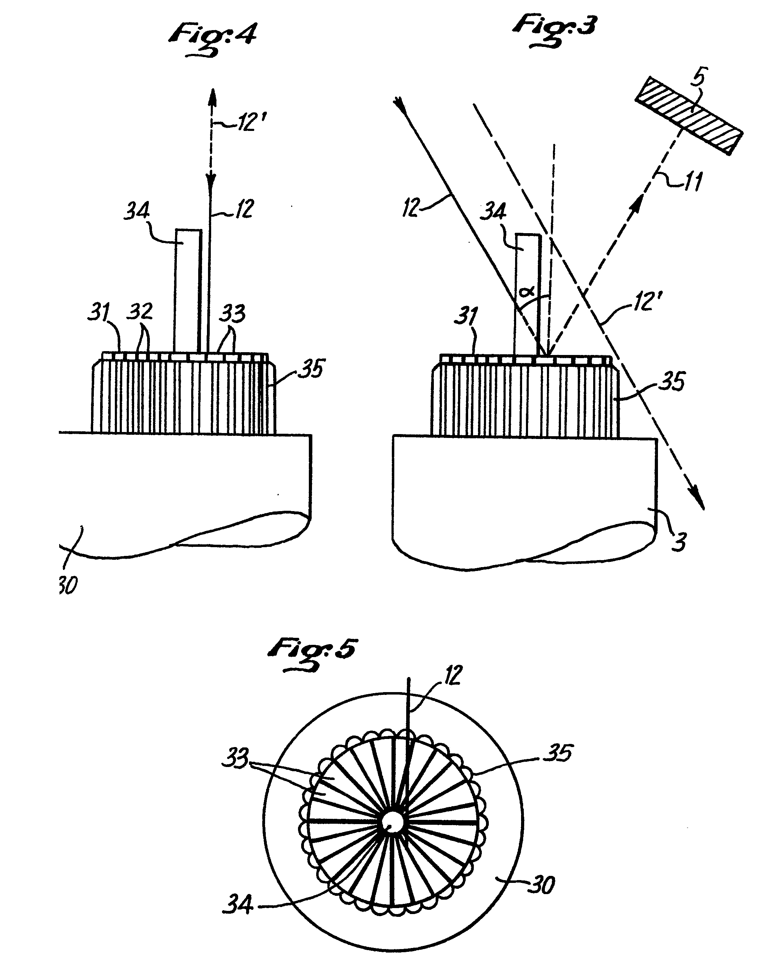

Le barillet 2 est monté sur son axe de rotation d'indexage 27, lequel est monté à ses deux extrémités sur un chariot 28, l'un des chariots portant en même temps l'indexeur 29. Les chariots 28 sont montés sur des rails de guidage 41 perpendiculaires à l'axe de rotation d'indexage 27, c'est-à-dire parallèles au plan de surface des collecteurs 31 à usiner. Pour usiner lesdits collecteurs, on fait tourner selon les flèches R les deux broches 25 du poste d'usinage tenant les deux rotors au poste d'usinage, on déplace les chariots 28 sur leurs rails 41 selon la flèche F depuis une position de départ 40 du rotor dans laquelle le plan du faisceau 12 parallèle à l'axe ne passe pas par l'axe ou arbre de rotation 34 du rotor 30 jusqu'à une position 40' dans laquelle le faisceau 12 demeuré fixe prend, par le déplacement en translation du rotor, selon la flèche F, la position relative 12' de la fig. 3, sans que le faisceau 12 ait jamais rencontré l'arbre ou axe 34. Il est également important selon l'invention que le rayonnement réfléchi 11 ne passe pas non plus par l'axe ou arbre 34 du rotor. L'entraînement en translation selon la flèche F jusqu'en 2' du barillet 2 avec les deux rotors 30 usinés au poste 21 se fait par une came tournante 42 entraînant un galet 43 entraînant une tige 44 solidaire d'un des deux chariots 28 du barillet, le profil de cette came étant tel qu'au cours du déplacement en translation selon la flèche F, la vitesse de ce déplacement ainsi commandée soit variable depuis une vitesse relativement rapide près de l'axe ou arbre 34 du rotor 30, jusqu'à une vitesse relativement moins rapide à la périphérie, de telle sorte que, par exemple, la vitesse tangentielle de balayage du collecteur 31 par le faisceau 12 soit constante pour obtenir une profondeur d'enlevure constante de l'isolant 32. Ce moyen mécanique par came pourra être remplacé par tout autre moyen connu équivalent, tel que commande à asservissement hydraulique, pneumatique ou électronique numérique ou analogique. On remarquera, plus particulièrement à la fig. 3, qu'en fin d'usinage le faisceau 12, ayant alors la position relative 12', n'atteint pas les bobinages 35 ou autres conducteurs ou éléments du rotor qui, grâce à l'inclinaison du faisceau sous l'angle α restent sous l'ombre projetée du collecteur 31 en toutes circonstances.

On décrira maintenant plus en détail les autres fonctions du bloc transfert 3 qui permet en un seul cycle opératoire d'usiner les collecteurs de deux rotors, d'en saisir deux autres en vue de leur usinage dans le cycle suivant et de décharger à un poste de reprise les deux qui ont été usinés dans le cycle précédent. Le bloc transfert 3 est placé entre deux transporteurs, par exemple deux transporteurs 51 e 52, pas à pas, du type dit à pas de pélerin. Le transporteur 51 approvisionne le poste de saisie 22 en y présentant simultanément dans le sens convenable les axes 34 de deux rotors 30', chacun respectivement en alignement de l'un des deux mandrins 26' perpendiculaires aux mandrins 26 actuellement au poste d'usinage 21. Le transporteur 52 dessert le poste de reprise 23 où se trouvent actuellement les deux mandrins 26'' diamétralement opposés à ceux 26' qui sont au poste de saisie 22. A un instant donné, au début de l'usinage au poste 21, deux rotors 30'' sont pris respectivement dans les mandrins 26'' positionnés serrés devant le poste de reprise 23 et deux rotors 30' sont en attente au poste de saisie 22 face à deux mandrins 26' desserrés en position opposée des précédents. On usine alors les collecteurs des deux rotors 30 actuellement au poste de traitement 21 en les mettant en rotation au moyen des broches 25 sur lesquelles ils sont montés, tout en déplaçant, comme il a été dit, le barillet 2 en translation selon la flèche F. Dès le début de la translation selon F, une commande asservie desserre les mâchoires des deux mandrins 26'' positionnés devant le poste de reprise 23, si bien que les rotors 30'' précédemment pris par ces mandrins sont déposés au poste de reprise 23, tandis qu'à la fin de la translation F, une commande asservie serre les mandrins 26' positionnés avec leurs mâchoires ouvertes devant le poste de saisie 22 après que les arbres 34 des rotors 30' en attente à ce poste ont pénétré dans les mandrins ouverts pendant la translation du barillet 2 selon la flèche F. Lorsque l'usinage est terminé, on arrête les broches d'entraînement des rotors maintenant usinés, les rotors 30'' déposés au poste de reprise ont été évacués entre temps par le transporteur 52, tandis que les rotors 30' en attente au poste de saisie 22, ou nouveaux rotors à usiner, sont en position dans deux mandrins. A ce moment, on serre les mandrins positionnés au poste de saisie 22, le bloc transfert 3 est reculé rapidement selon la flèche f, ce qui entraîne les deux nouveaux rotors, tandis qu'on fait tourner le barillet d'un quart de tour autour de son axe 27, dans le sens de la flèche r qui amène le tout à la position de départ identique à 90° près à la précédente pour un nouveau cycle d'usinage des deux nouveaux rotors, maintenant 30, de saisie et de reprise de rotors deux par deux. Bien entendu le cycle des opérations sera avantageusement automatique et assuré, par exemple, par une commande numérique ou équivalente.

Dans les exemples précédents, on a prévu d'interposer sur le trajet 11 du rayonnement éventuellement réfléchi par la partie non absorbante de la surface à traiter, un corps absorbant 5, par exemple en carbone, pour protéger le personnel et le matériel de ce rayonnement réfléchi.

Aux fig. 6 et 7 on a représenté un rotor 50 à collecteur cylindrique 51 autour d'un axe 54 dont on désire enlever jusqu'à une certaine profondeur l'isolant 52 d'entre les lames 53 à l'aide chaque fois d'un faisceau 12 associé. On voit que, conformément à l'invention, le faisceau 12, qui est dirigé à l'écart de l'axe ou arbre du rotor, présente en outre en projection perpendiculaire à l'axe 54 un angle β par rapport à une perpendiculaire à la surface du collecteur 51 et en projection en plan axial un angle γ par rapport à la même perpendiculaire, l'angle du faisceau par rapport à cette perpendiculaire étant d'au moins 15° environ à au plus 45° environ. L'inclinaison β est choisie pour ne pas atteindre d'autres parties du rotor 50 et notamment les bobinages 55 qui restent à l'ombre du collecteur pendant tout le temps de l'usinage au cours duquel on déplace, tout en le faisant tourner autour de son axe, le rotor selon son axe 54 pour que le faisceau le balaye en hélice. En fin d'usinage le faisceau extrême 12' n'atteint pas les bobinages 55.

On ne sortira pas du cadre de l'invention en lui apportant toutes modifications de détail, par exemple en asservissant à la position radiale instantanée du faisceau 12, non pas la vitesse de la translation F, mais la vitesse de la rotation R de la pièce de révolution traitée. On ne sortira pas non plus du cadre de l'invention en l'appliquant à d'autres problèmes que l'enlèvement de l'isolant dans l'entrelame de collecteurs.

**Revendications**

1. Procédé pour traiter par radiation électromagnétique (12) une surface plane (31) d'une pièce composite comprenant une première matière relativement plus absorbante (32) de cette radiation et une deuxième matière relativement moins absorbante (33) de cette radiation, ces deux matières (32, 33) apparaissant par zones à la surface, cette pièces composite faisant partie d'une masse (30) située au-delà d'un bord limitant la surface plane (31) à traiter, caractérisé en ce qu'on donne à la radiation (12) une inclinaison α par rapport à la perpendiculaire à cette surface (31), la valeur de cette inclinaison α étant déterminée pour que la masse (30) se trouve protégée en restant toujours dans l'ombre limitée par ledit bord de la surface traitée (31) et pour que le rayon (11) éventuellement réfléchi par cette dernière surface (31) se trouve sur une direction déterminée.

2. Procédé pour traiter par radiation électromagnétique (12) une surface cyclindrique (51) d'une pièce composite comprenant une première matière relativement plus absorbante (52) de cette radiation et une deuxième matière relativement moins absorbante (53) de cette radiation, ces deux matières apparaissant par zones à la surface, cette pièce composite faisant partie d'une masse (55) située au-delà d'un bord limitant la surface cylindrique (51) à traiter, caractérisé en ce qu'on donne à la radiation (12) une première inclinaison β dans un premier plan par rapport à la perpendiculaire à cette surface (51) pour obtenir à la fois un traitement convenable de la surface à traiter et une direction définie du rayon réfléchi éventuel, et une seconde inclinaison γ dans un second plan par rapport à la perpendiculaire à cette surface (51), la valeur de cette seconde inclinaison γ étant déterminée pour que la masse (55) se trouve protégée en restant toujours dans l'ombre limitée par ledit bord de la surface traitée (51) et pour que tout rayon réfléchi éventuel (11) se trouve sur une direction déterminée.

3. Procédé selon l'une des revendications 1, 2 selon lequel on place on corps absorbant ou dispersant (5) de la radiation (12) sur la direction du rayon réfléchi éventuel (11).

**Patentansprüche**

1. Verfahren zum Behandeln einer ebenen Fläche (31) eines zusammengesetzten Stückes mittels elektromagnetischer Strahlung (12), welches Stück einen ersten diese Strahlung relativ mehr absorbierenden Werkstoff (32) und einen zweiten, diese Strahlung relativ weniger absorbierenden Werkstoff (33) aufweist, welche beiden Werkstoffe (32, 33) in Zonen auf der Fläche erscheinen, wobei dieses zusammengesetzte Stück Bestandteil einer Masse (30) ist, die jenseits eines Randes angeordnet ist, der die zu behandelnde ebene Fläche (31) begrenzt, dadurch gekennzeichnet, dass der Strahlung (12) eine Neigung α zur Senkrechten auf dieser Fläche (31) erteilt wird, wobei der Wert dieser Neigung α so bestimmt ist, dass die Masse (30) geschützt ist, indem er stets im Schatten liegt, der durch den genannten Rand der behandelten Fläche (31) begrenzt ist, und dass der gegebenenfalls durch diese letztgenannte Fläche (31) reflektierte Strahl (11) sich in einer bestimmten Richtung befindet.

2. Verfahren zum Behandeln einer zylindrischen Fläche (51) eines zusammengesetzten Stückes mittels elektromagnetischer Strahlung, welches Stück einen ersten diese Strahlung relativ mehr absorbierenden Werkstoff (52) und einen zweiten diese Strahlung relativ weniger absorbierenden Werkstoff (53) enthält, welche beiden Werkstoffe in Zonen auf der Fläche erscheinen, wobei dieses zusammengesetzte Stück Bestandteil einer Masse (55) ist, die jenseits eines Randes angeordnet ist, der die zu behandelnde zylindrische Fläche (51) begrenzt, dadurch gekennzeichnet, dass der Strahlung (12) in einer ersten Ebene eine erste Neigung β zur Senkrechten auf dieser Fläche (51) erteilt wird, um gleichzeitig eine entsprechende Behandlung der zu behandelnden Fläche und eine definierte Richtung des eventuell reflektierten Strahles zu erhalten, und ferner in einer zweiten Ebene eine zweite Neigung γ zur Senkrechten auf dieser Fläche (51), wobei der Wert dieser zweiten Neigung γ so bestimmt ist, dass die Masse (55) geschützt ist, indem sie sich stets im Schatten befindet,der durch den genannten Rand der behandelten Fläche (51) begrenzt ist, und dass sich der gegebenenfalls reflektierte Strahl (11) in einer bestimmten Richtung sich befindet.

3. Verfahren nach Anspruch 1 oder 2, dadurch gekennzeichnet, dass ein die Strahlung (12) absorbierender oder streuender Körper (5) in die Richtung des gegebenenfalls reflektierten Strahles (11) angeordnet wird.

**Claims**

1. A method of treating by electromagnetic radiation (12) a plane surface (31) on a composite piece comprising a first substance (32) which is relatively more absorbent of the said radiation and a second substance (33) which is relatively less absorbent of the said radiation, these two substances (32, 33) appearing in zones at the surface, the said composite piece forming part of a mass (30) situated beyond an edge bounding the plane surface (31) which is to be treated, characterized in that the radiation (12) is given an inclination α with respect to the perpendicular to the said surface (31), the value of the said inclination α being determined so that the mass (30) is protected by remaining always in the shadow bounded by the said edge of the treated surface (31) and so that the beam (11) which is possibly reflected by the said surface (31) lies in a predetermined direction.

2. A method of treating by electromagnetic radiation (12) a cyclindrical surface (51) of a composite piece comprising a first substance (52) which is relatively more absorbent of the said radiation and a second substance (53) which is relatively less absorbent of the said radiation, these two substances appearing in zones at the surface, the said composite piece forming part of a mass (55) situated beyond an edge bounding the cylindrical surface (51) which is to be treated, characterized in that the radiation (12) is given a first inclination β in a first plane with respect to the perpendicular to the said surface (51) in order to obtain both suitable treatment of the surface which is to be treated and a definite direction of the possible reflected beam, and a second inclination γ in a second plane with respect to the perpendicular to the said surface (51), the value of this second inclination γ being determined so that the mass (55) is protected by remaining always in the shadow bounded by the said edge of the treated surface (51) and so that any possible reflected beam (11) lies in a predetermined direction.

3. A method as in one of the Claims 1, 2, in which a body (5) which is absorbent or dispersant of the radiation (12) is placed along the direction of the possible reflected beam (11).

Fig:1

*Fig. 2*

Fig.4

Fig.3

Fig.5

Fig. 6

Fig. 7

0 052 036